## Europäisches Patentamt

## European Patent Office

## Office européen des brevets

(19)

(11) Veröffentlichungsnummer: **0 060 915**

**A2**

(12) # EUROPÄISCHE PATENTANMELDUNG

(21) Anmeldenummer: **81106497.1**

(22) Anmeldetag: **21.08.81**

(51) Int. Cl.³: **H 01 G 4/30**
**H 01 G 1/013**

(30) Priorität: **20.03.81 DE 3110866**

(43) Veröffentlichungstag der Anmeldung:
**29.09.82 Patentblatt 82/39**

(84) Benannte Vertragsstaaten:
**AT CH FR GB IT LI NL SE**

(71) Anmelder. **DRALORIC Electronic GmbH**
**Geheimrat-Rosenthal-Strasse 100**
**D-8672 Selb(DE)**

(72) Erfinder: **Fink, Rudolf, Dipl.-Ing.**
**Försterstrasse 42**
**D-8672 Selb(DE)**

(54) **Elektrischer Kondensator.**

(57) Elektrischer Kondensator, der aus einer Anzahl übereinander angeordneter, selbsttragender dielektrischer Plättchen (1) zu einem Kondensatorkörper zusammengebaut ist, die selbsttragenden dielektrischen Plättchen (1) auf ihren beiden Hauptflächen mit Metallschichten (11) bedeckt sind, die wechselweise auf zwei gegenüberliegenden Schmalflächen (12) des Kondensatorkörpers durch Verbindungsmittel (2) zu den beiden Kondensatorbelägen zusammengeschaltet sind, wobei die Verbindungsmittel seitlich neben den selbsttragenden dielektrischen Plättchen (1) angeordnete selbsttragende Profilstreifen (2) sind, die außer auf der an die dielektrischen Plättchen (1) angrenzenden Schmalfläche (22) an ihrer Mantelfläche eine Metallschicht (21) besitzen, die Dicke des Profilstreifens (2) an der nichtmetallisierten Schmalfläche (22) der Dicke der Schmalflächen (12) zweier übereinander angeordneter selbsttragender dielektrischer Plättchen (1) entspricht, und die Profilstreifen (2) auf den beiden gegenüberliegenden Schmalflächen (12) des Kondensatorkörpers um ein selbsttragendes dielektrisches Plättchen (1) in der Höhe versetzt angeordnet sind. Dabei können die dielektrischen Plättchen alle flächengleich, vorzugsweise quadratisch sein und sich genau überdecken oder gegeneinander verdreht sein, oder sie können ungleich groß sein.

FIG.4

Elektrischer Kondensator

Die Erfindung betrifft einen elektrischen Kondensator gemäß dem Oberbegriff des Anspruches 1.

Ein derartiger Kondensator ist aus der DE-OS 27 32 748 bekannt, bei dem jedoch die selbsttragenden dielektrischen Schichten mit ihren Metallschichten durch bandförmige Metallfolien, die zwischen den dielektrischen Plättchen und seitlich neben ihnen verlaufen, elektrisch parallel geschaltet sind. Dieser Aufbau ergibt durch die zwischen den dielektrischen Plättchen befindlichen Metallfolien eine Gesamtdicke, die größenordnungsmäßig der doppelten Dicke der dielektrischen Plättchen allein entspricht.

Der Erfindung liegt die Aufgabe zugrunde, einen elektrischen Kondensator zur Verfügung zu stellen, der aus einfach in der Massenfabrikation herzustellenden, selbsttragenden dielektrischen Plättchen aufgebaut ist, der in engsten Kapazitätstoleranzen herstellbar ist, dessen Temperaturabhängigkeit der Kapazität wahlweise einstellbar ist und dessen Gesamtdicke relativ gering ist, so daß hohe Kapazitätswerte pro Volumeneinheit möglich sind.

Diese Aufgabe wird erfindungsgemäß durch die kennzeichnenden Merkmale des Anspruches 1 gelöst. Bevorzugte Ausbildungen der Erfindung sind in den Unteransprüchen gekennzeichnet.

Die mit der Erfindung erzielten Vorteile bestehen insbesondere darin, daß einfach und damit preisgünstig herstellbare, selbsttragende dielektrische Plättchen, die beidseitig vollständig mit einer Metallschicht bedeckt sind, einfach übereinander angeordnet und durch einfach herstellbare, seitlich neben den dielektrischen Plättchen angeordneten Profilstreifen aus elektrisch isolierendem Material zu einem elektrischen Kondensator zusammengeschaltet werden können, der in engsten Kapazitätstoleranzen und/oder mit einem definierten Temperaturkoeffizienten seiner Dielektrizitätskonstanten hergestellt werden kann und dessen Gesamtdicke relativ klein ist.

Ausführungsbeispiele der Erfindung sind in der Zeichnung dargestellt.
Es zeigen

Fig. 1  einen Schnitt durch einen Kondensatorkörper,
        bestehend aus gleichgroßen dielektrischen Plättchen,

Fig. 2  eine Draufsicht auf einen Kondensatorkörper entsprechend
        Fig. 1,

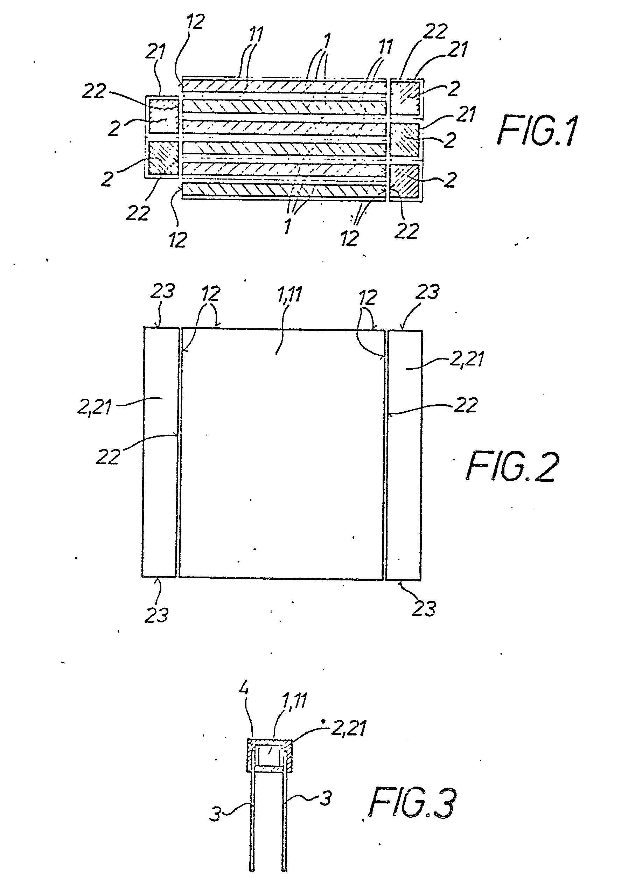

Fig. 3  einen Schnitt durch einen Kondensator in natürlicher
        Größe,

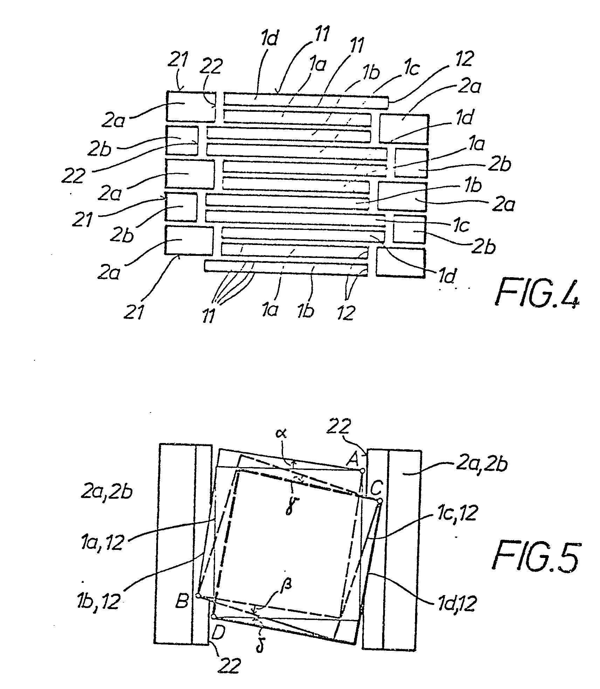

Fig. 4  einen Schnitt durch einen  Kondensatorkörper, bestehend
        aus gleichgroßen dielektrischen Plättchen, die gegeneinander verdreht sind, und

Fig. 5  eine Draufsicht auf einen Kondensatorkörper entsprechend
        Fig. 4.

Fig. 1 zeigt eine Anzahl übereinandergestapelter, selbsttragender dielektrischer Plättchen 1 in vergrößerter Darstellung, bei denen es sich um
dichtgesinterte keramische Plättchen, um Glimmerplättchen oder beispielsweise um Plättchen aus dielektrischem Kunststoff handeln kann. Diese
dielektrischen Plättchen 1 sind alle flächengleich und besitzen auf
ihren beiden Hauptflächen Metallschichten 11, welche die Hauptflächen
vollständig bedecken. An die nichtmetallisierten Schmalflächen 12
angefügt sind Profilstreifen 2 aus elektrisch isolierendem Material,
beispielsweise aus dem gleichen Material wie die dielektrischen Plättchen.
Die Profilstreifen 2 sind auf ihrer Mantelfläche mit Ausnahme der an den
Schmalflächen 12 der dielektrischen Plättchen 1 anliegenden Schmalfläche
22 mit einer Metallschicht 21 bedeckt, wobei jeder Profilstreifen 2 die
Dicke zweier dielektrischer Plättchen 1 besitzt und die Profilstreifen 2 auf den beiden gegenüberliegenden Schmalflächen des Kondensatorkörpers um die Dicke eines dielektrischen Plättchens 1 versetzt angeordnet sind. Durch vorverzinnte Metallschichten 11 und 21 ergibt sich
nach einer Erhitzung des Kondensatorkörpers eine Parallelschaltung der Metallschichten 11 der dielektrischen Plättchen 1 zu den beiden Belägen des Kondensators. Die äußeren beiden Metallschichten 11 können vor oder nach dem Zusammenbau des Kondensatorkörpers durch Sandstrahlen zum Teil abgetragen werden, wodurch ein Abgleich des Kondensators auf engste Kapazitätstoleranzen möglich ist.

Fig. 2 zeigt deckungsgleich übereinanderliegende, gleichgroße quadratische dielektrische Plättchen 1, die auf beiden Hauptflächen mit Metallschichten 11 bedeckt sind. An zwei gegenüberliegenden, nichtmetallisierten Schmalflächen 12 liegen Profilstreifen 2 an, die bis auf die Schmalflächen 22 auf ihrer Mantelfläche mit einer Metallschicht 21 bedeckt sind. Die Stirnflächen 23 der Profilstreifen sind ebenfalls nicht metallisiert.

Fig. 3 zeigt einen elektrischen Kondensator, der aus mit Metallschichten 11 bedeckten dielektrischen Plättchen 1 quadratischer Grundflächengestalt und zwei seitlich daneben angeordneten, mit Metallschichten 21 bedeckten Profilstreifen 2 besteht, und der mit einer elektrisch isolierenden Umhüllung 4 umgeben ist, aus der die beiden Anschlußdrähte 3 herausragen, die mit den Metallschichten der Beläge des Kondensators verbunden sind.

Fig. 4 zeigt einen aus übereinandergestapelten dielektrischen Plättchen 1a bis 1d bestehenden Kondensatorkörper, wobei die dielektrischen Plättchen 1a bis 1d die dargestellten unterschiedlichen Größen besitzen können oder quadratisch gleichgroß und gegeneinander verdreht sein können. Die dielektrischen Plättchen 1a bis 1d sind beidseitig mit einer Metallschicht 11 bedeckt. Durch die dargestellte, seitlich versetzte Anordnung der mit Metallschichten 11 bedeckten, dielektrischen Plättchen 1a bis 1d und die dargestellte Anordnung der an den unmetallisierten Seitenflächen 12 befindlichen Profilstreifen 2a und 2b sind die Metallschichten 11 durch die Metallschichten 21 auf den Profilstreifen 2 unmittelbar zu den beiden Belägen des Kondensators parallel geschaltet, weil stets eine entsprechende Metallschicht 11 zwischen der mit ihr benachbarten Metallschicht 11 und der daneben auf gleicher Höhe liegenden Metallschicht 21 des Profilstreifens 2 eine galvanische Verbindung herstellt.

Fig. 5 zeigt gleichgroße dielektrische Plättchen 1a bis 1d in Draufsicht, die auf beiden Hauptflächen vollständig mit Metallschichten 11 bedeckt sind. Zur besseren Verdeutlichung der Lage der übereinander angeordneten dielektrischen Plättchen 1a bis 1d sind diese in unterschiedlichen Strichstärken dargestellt. Das dielektrische Plättchen 1b ist gegen das dielektrische Plättchen 1a um den Drehpunkt A um den Drehwinkel $\alpha$ verdreht; das dielektrische Plättchen 1c ist gegen das dielektrische Plättchen 1b um den Drehpunkt B um den Drehwinkel $\beta$ verdreht; das dielektrische Plättchen 1d ist gegen das dielektrische Plättchen 1c um den Drehpunkt C um den Drehwinkel $\gamma$ verdreht - wobei die Drehwinkel $\alpha$, $\beta$, $\gamma$ und $\delta$ gleichgroß sind. Auf das dielektrische Plättchen 1d folgt wieder ein dielektrisches Plättchen 1a, welches gegen das dielektrische Plättchen 1d um den Drehpunkt D um den Drehwinkel $\delta$ in die Lage des erstgenannten dielektrischen Plättchens 1a gedreht ist. Diese Abfolge der dielektrischen Plättchen 1a bis 1d kann beliebig oft aufeinanderfolgen, bis der gewünschte Kapazitätswert des Kondensators erreicht ist. Seitlich neben den dielektrischen Plättchen 1a bis 1d sind die Profilstreifen 2a und 2b entsprechend der Fig. 4 angeordnet, derart, daß die die Metallschichten 21 der Profilstreifen 2a und 2b überdeckenden kantennahen Bereiche der dielektrischen Plättchen 1a bis 1d unmittelbar zu den beiden Belägen des Kondensators parallel geschaltet sind. Insbesondere vorverzinnte Metallschichten 11 und 21 führen nach dem Aufeinanderstapeln in der dargestellten Form und einer einzigen Temperaturbehandlung bis zur Schmelztemperatur des Zinns zu einem kompakten Kondensatorkörper.

Die Drehung der dielektrischen Plättchen 1a bis 1d muß nicht um die angegebenen Drehpunkte und die Drehwinkel geschehen; wichtig ist allein eine Anordnung der dielektrischen Plättchen 1a bis 1d derart, daß sich eine Versetzung entsprechend der in Fig. 4 dargestellten Form ergibt.

PATENTANSPRÜCHE

1. Elektrischer Kondensator, der aus einer Anzahl übereinander angeordneter, selbsttragender dielektrischer Plättchen zu einem Kondensatorkörper zusammengebaut ist, die selbsttragenden dielektrischen Plättchen auf ihren beiden Hauptflächen mit Metallschichten bedeckt sind, die wechselweise auf zwei gegenüberliegenden Schmalflächen des Kondensatorkörpers durch Verbindungsmittel zu den beiden Kondensatorbelägen zusammengeschaltet sind, dadurch gekennzeichnet,

daß die Verbindungsmittel seitlich neben den selbsttragenden dielektrischen Plättchen (1) angeordnete selbsttragende Profilstreifen (2) sind, die außer auf der an die dielektrischen Plättchen (1) angrenzenden Schmalfläche (22) an ihrer Mantelfläche eine Metallschicht (21) besitzen, die Dicke des Profilstreifens (2) an der nichtmetallisierten Schmalfläche (22) der Dicke der Schmalflächen (12) zweier übereinander angeordneter, selbsttragender, dielektrischer Plättchen (1) entspricht, und die Profilstreifen (2) des Kondensatorkörpers um ein selbsttragendes dielektrisches Plättchen (1) in der Höhe versetzt angeordnet sind.

2. Elektrischer Kondensator nach Anspruch 1, dadurch gekennzeichnet, daß die selbsttragenden, dielektrischen Plättchen (1) alle die gleichen Grundflächenabmessungen und auch die Profilstreifen (2) gleiche Abmessungen besitzen..

3. Elektrischer Kondensator nach Anspruch 1 oder 2, dadurch gekennzeichnet, daß die übereinander angeordneten, selbsttragenden dielektrischen Plättchen (1) alle gleich ausgerichtet, in Projektion gesehen deckungsgleich übereinander liegen und die Profilstreifen (2) eng an den dielektrischen Plättchen (1) anliegen.

4. Elektrischer Kondensator nach Anspruch 1 oder 2, dadurch gekennzeichnet, daß die übereinander angeordneten, selbsttragenden dielektrischen Plättchen (1) in Projektion gesehen gegeneinander um einige Winkelgrade verdreht sind, derart, daß kantennahe Bereiche der dielektrischen Plättchen (1) auf abwechselnd ungleich breiten Profilstreifen (2) aufliegen und die Metallschichten (11) dadurch zu den beiden Kondensatorbelägen parallel geschaltet sind.

5. Elektrischer Kondensator nach Anspruch 1, dadurch gekennzeichnet, daß die selbsttragenden dielektrischen Plättchen (1) verschieden große Grundflächen besitzen und mit verschieden breiten Profilstreifen (2) derart zusammengebaut sind, daß die Metallschichten (11) zu den beiden Kondensatorbelägen parallel geschaltet sind. (Fig. 4).

6. Elektrischer Kondensator nach einem der Ansprüche 1 bis 5, dadurch gekennzeichnet, daß die Metallschichten (11) der dielektrischen Plättchen (1) und die Metallschichten (21) auf den Profilstreifen (2) zusammengelötet sind.

7. Elektrischer Kondensator nach einem der Ansprüche 1 bis 6, dadurch gekennzeichnet, daß die selbsttragenden dielektrischen Plättchen (1) alle aus dem gleichen dielektrischen Material besteht.

8. Elektrischer Kondensator nach einem der Ansprüche 1 bis 6, dadurch gekennzeichnet, daß die selbsttragenden dielektrischen Plättchen (1) aus keramischen Materialien unterschiedlicher Temperaturabhängigkeit der Dielektrizitätskonstanten bestehen.

9. Elektrischer Kondensator nach einem der Ansprüche 1 bis 8, dadurch gekennzeichnet, daß mindestens das äußere, zum Kapazitätswert des Kondensators einen Beitrag liefernde, aktive dielektrische Plättchen (1) eine äußere Metallschicht (11) besitzt, die das dielektrische Plättchen (1) nicht vollständig bedeckt.

FIG.1

FIG.2

FIG.3

**FIG.4**

**FIG.5**